# EUROPEAN PATENT APPLICATION

(11) **EP 0 704 492 A2**
(43) Date of publication of application: **03.04.1996**
(21) Application number: 95306918.4
(22) Date of filing: 29.09.1995
(51) Int. Cl.: C08L 83/04

(54) **Molding method of composite**

(30) Priority: 29.09.1994 JP 259498/94
(71) Applicant: Dow Corning Toray Silicone Company, Limited, Tokyo 103 (JP)
(72) Inventor: Nakamura, Akito, Dow Corning Toray, Ichihara-shi, Chiba Prefecture (JP); Shigehisa, Yasumichi, Dow Corning Toray, Ichihara-shi, Chiba Prefecture (JP)
(74) Representative: Dowden, Marina

(57) **Abstract**

A method for making a composite comprising silicone rubber and thermoplastic resin in high precision and productivity is disclosed. In the method, a thermoplastic resin is injected into the cavity of a mold. Then, a liquid silicone rubber composition which comprises (A) organopolysiloxane, (B) spherical particle catalyst consisting of platinum catalyst contained in a thermoplastic resin, (C) organohydrogenpolysiloxane, and (D) hydrosilylation reaction inhibitor, is injected into the same mold and cured.

## Description

### BACKGROUND OF INVENTION

The present invention is a method for molding a composite consisting of silicone rubber and a thermoplastic resin.

A previously known method is one in which the thermoplastic resin is injection-molded in advance and the unvulcanized silicone rubber is then put in the cavity of the same mold and pressure molded thereon (monocomponent molding method). Another known method is one where the thermoplastic resin is injected and successively unvulcanized silicone rubber is injected into the same cavity and then molded simultaneously (multicomponent molding method).

However, the monocomponent molding method has problems in that the thermoplastic resin molding tends to deform by heating; it is difficult to obtain a high precision composite; and the productivity is extremely low. In the multicomponent method, which overcomes monocomponent problems, a silicone rubber composition is required which quickly cures below the softening point of the thermoplastic resin. A quick curing silicone rubber composition has previously been achieved by either adding large amounts of platinum catalyst, or by adjusting the kind or amount of the inhibitor. Typically quick curing silicone rubber compositions are disclosed in JP-A's 62-207611 and 62-264920.

However, the compositions disclosed therein have a fault in that they have poor storage stability and their curing proceeds in the mixer often forming gels. This requires that the mixer section be cooled to below 5°C, which is expensive. An additional problem associated with cooling the mixer section is moisture condensation which can also effect productivity.

The objective of the present invention is to provide a method for manufacturing composites of silicone rubber and thermoplastic resin in high precision and productivity.

In our method, a thermoplastic resin is injected into the cavity of a mold. Then, a liquid silicone rubber composition which comprises (A) organopolysiloxane, (B) spherical platinum catalysts in a thermoplastic resin, (C) organohydrogenpolysiloxane, and (D) hydrosilylation reaction inhibitor is injected into the same mold and cured.

The present invention introduces a method for molding a composite in which a thermoplastic resin and a liquid silicone rubber composition are consecutively injected consecutively into the cavity of a single mold, or the cavity formed by two or more molds. In our method, the thermoplastic resin undergoes the primary injection followed by a secondary injection of the liquid silicone rubber composition. The liquid silicone rubber composition is cured at a temperature higher than 50°C and lower than the softening point of the aforesaid thermoplastic resin. Our liquid silicone rubber composition comprises
(A) 100 parts by weight of an organopolysiloxane described by average unit formula R¹ₐR²_{b}SiO_{(4-a-b)/2}, where R¹ is a monovalent hydrocarbon group which does not contain aliphatic unsaturated linkage, R is an alkenyl group, a is a number of 1.90 to 2.05, b is a number of 0.0005 to 0.1, and a+b is a number of 1.91 to 2.06,
(B) 1 to 1,000 parts by weight of platinum metal per one million parts of constituent (A), where the platinum metal is added as a spherical particle comprising a thermoplastic resin having a softening point temperature of 50 to 150°C, an average particle size of 0.01 to 10 µm, and a platinum catalyst providing 0.01 weight percent or greater of platinum metal,
(C) an organohydrogenpolysiloxane containing at least 3 hydrogen atoms bonded to silicon atoms in a molecule and the amount of (C) is such that the ratio of the number of moles of hydrogen atoms bonded to silicon atoms in (C) and the number of moles of alkenyl groups bonded to silicon atoms in (A) is 0.5:1 to 20:1, and
(D) 0.005 to 10 parts by weight of a hydrosilylation reaction-inhibitor.

The thermoplastic resin used in the present invention is any thermoplastic resin which can be injection-molded, and there is no particular limitation for its kind. The thermoplastic resin is, for example, nylon-6, nylon-66, polystyrene, styrene-butadiene copolymer, acrylonitrile-butadiene-styrene copolymer (ABS), polycarbonate, poly(methyl methacrylate), or poly(vinyl chloride).

The (A) constituent, organopolysiloxane, is the principal constituent of our liquid silicone rubber composition. R¹ is a monovalent hydrocarbon group which does not contain aliphatic unsaturated linkage, for example, an alkyl group such as methyl, ethyl, propyl, butyl, and octyl; an aryl group such as phenyl and tolyl; or a substituted alkyl group such as chloromethyl and 3,3,3-trifluoropropyl. R is an alkenyl group, such as vinyl, allyl, or hexenyl. "a" is a number of 1.90 to 2.05, expressing the number of monovalent hydrocarbon groups which do not contain aliphatic unsaturated linkage, and b is a number of 0.0005 to 0.1, expressing the number of alkenyl groups. In the formula, a+b is a number of 1.91 to 2.06.

The molecular structure of (A) is preferably straight chain, but the presence of a small amount of branched chain is allowed. The alkenyl groups in (A) are either terminal on the molecular chain, pendant on the molecular chain, or both. Preferred is when the alkenyl groups of (A) are on the terminals since the mechanical characteristics of the silicone rubber after curing are then superior. While there is no particular limitation for the viscosity of (A), it is preferable that it be in the range of 10 to 1,000,000 centipoise (mPa.s) at 25°C. The (A) constituent is, for example, dimethylvinylsiloxy-capped dimethylpolysiloxane, trimethylsiloxy-capped dimethylsiloxane-methylvinylsiloxane copolymer, dimethylvinylsiloxy-capped dimethylsiloxane-methylvinylsiloxane copolymer, dimethylvinylsiloxy-capped dimethylsiloxane-methylphenylsiloxane copolymer, and dimethylvinylsiloxy-capped dimethylsiloxane-methyl(3,3,3-trifluoropropyl)siloxane copolymer.

The (B) constituent is the constituent which distinguishes the liquid silicone rubber of the present invention. It is the hydrosilylation catalyst for the addition reaction between the alkenyl groups bonded to silicon atoms in (A) and the hydrogen atoms bonded to silicon atoms in (C). It comprises a thermoplastic resin which contains a platinum base catalyst at a concentration providing 0.01 weight percent or higher of platinum metal on an elemental basis. The platinum base catalyst is, for example, platinum powder, chloroplatinic acid, alcohol-modified chloroplatinic acid, a complex of platinum and diketone, a complex of chloroplatinic acid and an olefin, a complex of chloroplatinic acid and an alkenylsiloxane, and any of these compounds supported on, for example, alumina, silica, and carbon black. A complex of chloroplatinic acid and an alkenylsiloxane is preferred since its activity as a hydrosilylation reaction catalyst is high. More preferred is a platinum alkenylsiloxane complex as disclosed in JP-A 42-22924.

The softening point of the thermoplastic resin of the (B) constituent is required to be in a temperature range of 50 to 150°C. If the softening point is lower than 50°C, the storage stability of our liquid silicone rubber composition at room temperature is degraded drastically. If the softing temperature exceeds 150°C, the temperature to activate the catalyst becomes too high and the curing temperature of the composition becomes unacceptably high. The thermoplastic resin is thermoplastic silicone resin, thermoplastic acrylic resin, thermoplastic polysilane resin, thermoplastic polystyrene resin, and thermoplastic methylcellulose resin. When a thermoplastic silicone resin is used as (B), there is no particular limitation for its molecular chemical structure. However, it must also be insoluble in (A). Further, it is necessary to select (B) so that its softening point is lower than the softening point of the plastic which is molded into the composite.

The average particle size of the spherical particle catalyst of (B) is in the range of 0.01 to 10 µm. It is difficult to produce spherical particle catalyst of less than 0.01 µm. If the particle size exceeds 10 µm, the catalytic activity of the spherical particle catalyst is reduced and the spherical particles tend to separate from the liquid silicone rubber composition.

The amount of addition of (B) is in the range of 1 to 1000 parts by weight as platinum metal per 1 million parts by weight of organopolysiloxane, the (A) constituent. Preferably, The added amount of platinum metal is in the range of 1 to 100 parts by weight. If platinum metal addition is less than 1 part by weight per 1 million parts by weight of (A), the liquid silicone rubber composition obtained cannot be cured sufficiently. If the platinum metal of the (B) constituent exceeds 100 parts by weight, it is uneconomical.

The (C) constituent is a crosslinking agent and is an organohydrogenpolysiloxane which contains at least 3 hydrogen atoms bonded to silicon atoms in a molecule. Other than hydrogen atoms bonded to silicon atoms, the organic groups bonded to silicon atoms in the (C) constituent are alkyl groups such as methyl, ethyl, and propyl; aryl groups such as phenyl or tolyl; and substituted alkyl groups such as chloromethyl, 3-chloropropyl, and 3,3,3-trifluoropropyl.

There is no particular limitation on the molecular structure of the (C) constituent, and it can be straight chain, straight chain with branches, cyclic, or network. The viscosity of (C) is preferably in the range of 3 to 10,000 centipoise (mPa.s) at 25°C. The amount of addition of (C) is that providing a ratio of the number of moles of hydrogen atoms bonded to silicon atoms in (C) to the number of moles of alkenyl groups bonded to silicon atoms in (A) of 0.5:1 to 20:1, and preferably 1:1 to 3:1. If the number of moles of hydrogen atoms bonded to silicon atoms is less than 0.5 per mole of alkenyl group, the composition obtained does not sufficiently cure. If the ratio of moles of hydrogen atoms bonded to silicon to mole of alkenyl group exceeds 20, the silicone rubber may unsuitably foam.

The (D) constituent inhibits the heat curing of our liquid silicone rubber composition. This substance is a hydrosilylation reaction inhibiton which has the effects of delaying curing and improving the storage stability of our composition. Previously known inhibitors are used as (D), for example, phosphorus containing compounds such as triphenylphosphine; nitrogen containing compounds such as tributylamine, tetramethylethylenediamine, and benzotriazole; sulfur containing compounds; acetylene based compounds; enyne compounds; hydroperoxy compounds; and maleic acid derivatives. The preferred inhibitors are selected from a group of compounds which contain at least one alkynyl group in a molecule, organosilicon compounds which contain alkynyl groups and alcoholic hydroxyl groups in a molecule, and organosilicon compounds in which alkenyl groups are bonded to at least two silicon atoms that are bonded to each other through an oxygen atom. For example, the inhibitor can be 2-methyl-3-butyn-2-ol, 2-phenyl-3-butyn-2-ol, 1-ethynyl-1-cyclohexanol, 3-methyl-1-hexyn-3-ol, 1,5-hexadiyne, 1,6-heptadiyne, 1,3-divinyltetramethyldisiloxane, 1,3,5,7-tetravinyltetramethylcyclotetrasiloxane, and 1,3-divinyl-1,3-diphenyldimethyldisiloxane.

Preferably, (D) has a boiling point higher than 80°C at ambient pressure, and its solubility in (A) is also high. If the boiling point at ambient pressure is lower than 80°C, the inhibitor tends to evaporate from this composition. If the solubility of the inhibiting compound in (A) is low, the inhibiting effect of (D) on the disolved platinum catalyst is reduced during the heat curing process.

The amount of addition of (D) is that providing 0.005 to 10 parts by weight per 100 parts by weight of (A). If less than 0.005 part by weight is added, the storage stability of the obtained liquid silicone rubber composition is degraded. If the amount of inhibitor exceeds 10 parts by weight, curability of the composition at temperatures below the softening point of the thermoplastic resin is degraded.

Although our liquid silicone rubber composition consists of the aforesaid (A) through (D) constituents, there can also be added, as needed, reinforcing fillers, such as fumed silica, wet method silica, silica aerogel, and fumed silica of which the surface has been hydrophobicized. Other optional additives that can be added to our liquid silicone rubber composition include, for example, heat resisting agents such as iron oxide and rare earth compounds; flame retardants such as manganese carbonate and fumed titanium dioxide; extending fillers such as quartz powder, diatomaceous earth, calcium carbonate, and carbon black, and pigments.

Our liquid silicone rubber composition used is obtained by uniformly mixing the aforesaid (A) through (D) constituents. There is no particular limitation in the method or, the order of their mixing. To improve storage stability of the composition in the vicinity of room temperature, and to obtain excellent curability when applied to our multicomponent molding method after storage, it is preferable to store the liquid silicone rubber composition as a two-part system. Preferably, part 1 comprises a portion of (A) and (B) ; and part 2 comprises the other portion of (A), and all of (C), and (D).

In our molding method, there is no need to have cooling equipment, such as a chiller, to obtain extended storage stability in the mixer. It is possible to obtain sufficiently long storage stability by cooling of the mixer section just to the vicinity of room temperature.

In our invention, the curing temperature of the liquid silicone rubber composition, which undergoes the secondary injection, is required to be above the softening point of the thermoplastic resin comprising the spherical particle catalyst, and below the softening point of the thermoplastic resin which undergoes the primary injection. If the curing temperature of the silicone rubber composition is below the softening point of the thermoplastic resin of the platinum catalyst, the curing rate of the composition is decreased and the productivity is drastically degraded. If the curing temperature of the liquid silicon rubber composition exceeds the softening point of the primary injected thermoplastic resin, a composite of high precision cannot be obtained.

The molding method of the present invention requires at least 2 injection processes per composite, but it can also have 3 or more injection processes. In this case, "primary injection" and "secondary injection" indicate the order of two consecutive injection processes.

The molds used in our molding method are those previously known in the art. The mold can be split into a top and bottom, or left and right components. The mold may consist of single or plural components which can form a cavity when they are mutually fitted tightly together.

In the method of this invention, the primary injection of the thermoplastic resin into the cavity of a single mold is followed by the secondary injection of our liquid silicone rubber composition. Alternatively, after primary injection of the thermoplastic resin, the mold can be opened and tightly fitted with another mold having a concave molding segment, and then a secondary injection of silicone rubber composition may be forces into the cavity formed in extension to the cavity of the primary injection.

In theis invention, primers may also be used to improve the adhesion of the thermoplastic resin and the silicone rubber composition. When primer is used, the mold is opened after the primary injection of the thermoplastic resin, and the primer is then coated or sprayed on the surface of the thermoplastic resin molding. This is followed by the secondary injection of the liquid silicone rubber composition, which is then cured. The appropriate primer for this application is one in which the principal constituent is titanate ester or a silane coupling agent.

The method of the present invention is easily practiced by any combination of known liquid silicone rubber injection molding machines known thermoplastic resin molding machines, and their molds.

According to our invention, the composite of silicone rubber and thermoplastic resin, which was previously almost unobtainable, is manufactured in high precision and productivity.

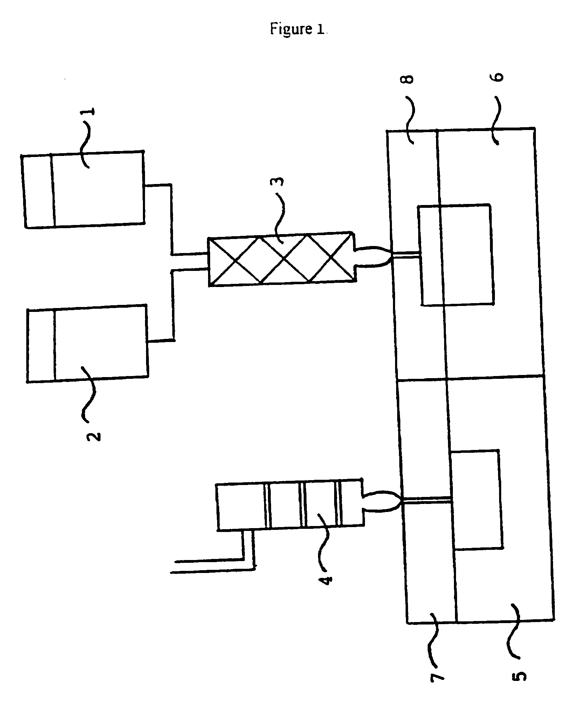

In the Examples, the viscosity is the value at 25°C. In the methods of molding the composites of Example 1 and 2, the apparatus shown in Figure 1 was used.

Figure 1 shows an apparatus used in the molding method of the present invention. Explanation of symbols:
1 Tank for liquid silicone rubber
2 Tank for liquid silicone rubber
3 Static mixer
4 Thermoplastic resin injection molding machine
5 Primary bottom mobile mold
6 Secondary bottom mobile mold
7 Primary top stationary mold
8 Secondary top stationary mold

Reference Example 1. A platinum vinylsiloxane complex was prepared. Six grams of an aqueous solution of chloroplatinic acid (platinum metal content 33 weight %) and 16 g of 1,3-divinyltetramethyldisiloxane were dissolved in 35 g of isopropyl alcohol. Ten grams of sodium hydrogencarbonate was added to this solution and reacted for 30 minutes at 70 to 80°C while stirring in suspension. Isopropyl alcohol and water were then evaporated from the suspension at a pressure of 6.7 kPa (50 m Hg) and a temperature of 45°C. The solid component was filtered and a 1,3-divinyltetramethyldisiloxane platinum vinylsiloxane complex recovered in which the platinum content was 9.8 weight percent.

Reference Example 2. Preparation of silicone resin spherical particles. A solution was prepared by diluting 332 g of phenyltrichlorosilane, 53 g of dimethyldichlorosilane, and 110 g of diphenyldichlorosilane in 150 g of toluene. This solution was dropped into a liquid mixture consisting of 430 g of toluene, 142 g of methylethylketone, and 114 g of water for hydrolysis. This reaction mixture was washed with water to remove hydrogen chloride and the organic layer was separated. Methylethylketone was removed by heating. Subsequently, 0.2 g of potassium hydroxide was added and the resulting mixture heated. The generated water was removed by evaporation, the resulting siloxane mixture was neutralized with acetic acid and then washed with repeated water rinses. The siloxane mixture was dried to obtain a thermoplastic silicone resin. The glass transition point of this silicone resin was 65°C, and the softening point was 85°C.

Then, 900 g of this thermoplastic silicone resin, 500 g of toluene, and 4,600 g of dichloromethane were loaded into a glass vessel containing a stirrer and mixed uniformly. 44.4 g of the platinum vinylsiloxane complex prepared in Reference Example 1 were added and mixed to prepare an uniform solution of platinum vinylsiloxane complex and thermoplastic silicone resin. This solution was continuously sprayed into a spray-dryer chamber using a fluid nozzle, with hot nitrogen gas as the carrier gas. The temperature of the nitrogen gas was 95°C at the inlet of the spray-dryer chamber and 45°C at the outlet. The flow rate was 1.3 m³/min. After 1 hour of operation, 450 g of a thermoplastic silicone resin particle catalyst, containing a platinum vinylsiloxane complex, had been captured by means of a bag filter. The average particle size of this catalyst was 1.1 µm, and the content of the catalyst of 5 µm or larger was 0.5 weight percent. Scanning electron microscope (SEM) observation of the fine particle catalyst confirmed that it was spherical in shape. The platinum catalyst contained in the fine particle catalyst was about 0.4 wt % as platinum metal.

Reference Example 3. Preparation of thermoplastic acrylic resin spherical particle catalyst. A thermoplastic acrylic resin catalyst was prepared by the same procedure as described in Reference Example 2 except that a methylmethacrylate-butylmethacrylate copolymer (DuPont Co., Elvacite^{TM} 2013) with a glass transition point of 80°C and a softening point of 115°C (product of DuPont Co., Elvacite 2013) was used instead of silicone resin. The average particle size of this particle catalyst was 2.5 µm, and the content of the fine particle catalyst having a particle size of 10 µm or larger was 2.0 wt %. SEM observation of this particle catalyst confirmed that it was spherical in shape. The platinum catalyst contained in this catalyst was about 0.39 wt % as platinum metal.

Example 1. 100 parts by weight of dimethylvinylsiloxy-capped dimethylpolysiloxane having a viscosity of 10,000 centipoise, 30 parts by weight of fumed silica having a specific surface area of 200 m/g, 5 parts by weight of hexamethyldisilazane as a surface treatment agent for the silica, and 2 parts by weight of water were mixed uniformly. The mixture was further subjected to heated mixing for 2 hours at 170°C under vacuum. After cooling, a base compound was obtained, and 0.7 part by weight of silicone resin spherical particle catalyst prepared in Reference Example 2 was added to 100 parts by weight of this base compound and mixed to uniformity to prepare composition 1.

Then, 2.6 parts by weight of trimethylsiloxy-capped dimethylsiloxane-methylhydrogensiloxane copolymer containing 0.7 wt % hydrogen atoms bonded to silicon atoms and 0.01 part by weight of 3-methyl-1-hexyn-3-ol were added to 100 parts by weight of an aforesaid base compound of Example 1 and were mixed to uniformity to prepare composition 2.

Composition 1 was loaded into a tank for liquid silicone rubber, and similarly, composition 2 was loaded into a separate tank 2. The compositions were sent to a static mixer using a pressure flow pump and mixed in a 1:1 weight ratio to obtain a liquid silicone rubber composition.

Next, nylon 66 resin (a product of Toray Industries) was loaded into a thermoplastic resin injection molding machine and melted at a temperature of 230 to 250°C.

Then, a consecutive injection molding apparatus was set up which comprised a first bottom mobile mold having a concave molding segment, a second bottom mobile mold having the same concave molding segment as the first bottom mobile mold, a first top stationary mold having a path for primary injection material and a gate, and a second top stationary mold having a concave molding segment and a path for secondary injection material and a gate. The two top stationary molds were capable of fitting tightly with the two interchangeable bottom mobile molds. The first top stationary mold was mated with the concave molding segment of the bottom mobile molds to form a partial cavity and the second top stationary mold was to fitted with the bottom mobile molds to form a cavity for molding the main body.

Using this apparatus, the aforesaid nylon 66 resin underwent the primary injection into the partial cavity formed by tight fitting of the first top stationary mold and the first bottom mobile mold which were heated to a temperature of 70°C. The injection time was 10 seconds and the solidification time was 30 seconds. Subsequently, the first bottom mobile mold carrying this nylon resin molding was fitted tightly to the second top stationary mold which was heated to a temperature of 110°C, and into the newly formed main body cavity, the liquid silicone rubber composition obtained in the foregoing was injected and cured. The injection time was 10 seconds and the heating time was 30 seconds. The composite obtained was a unified molding of the cured liquid silicone rubber composition and the nylon 66 resin. The interface of the composite was flat, the dimensional precision was excellent, and productivity was high. No problems were experienced even after 200 consecutive moldings. Also, since the static mixer section was not cooled by a chiller, there was no moisture condensation experienced. Furthermore, after the completion of the consecutive moldings, the mixture of the compositions 1 and 2 maintained its fluidity for more than a week in the mixer at room temperature.

Comparison Example 1. A liquid silicone rubber composition, denominated as composition 3, was prepared by the same procedure as described in Example 1, except that 0.02 part by weight of platinum vinylsiloxane complex composition prepared in Reference Example 1 was added.

A liquid silicone rubber composition was obtained by uniformly mixing the aforesaid composition 3 and a composition 2 as prepared in Example 1, in a 1:1 weight ratio. Using the consecutive injection molding apparatus of Example 1, consecutive moldings were performed by the same procedure described in Example 1. After 30 moldings, gelation occurred in the liquid silicone rubber composition and good composite moldings could not be obtained. After completion of these consecutive moldings, the content of the mixer was hardened in 3 hours when left at room temperature.

Comparison Example 2. When the liquid silicone rubber composition obtained in Comparison Example 1 was cooled to 5°C and the same consecutive moldings attempted as described in Comparison Example 1, no gelation was observed even after 30 moldings. However, the content of the mixer when left at room temperature was hardened in only 8 hours. Also, moisture condensation occurred around the mixer and it was very messy.

Example 2. A liquid silicone rubber composition, composition 4, was prepared by the same procedure as described in Example 1, except that the thermoplastic acrylic resin spherical particle catalyst prepared in Reference Example 3 was used.

The liquid silicone rubber composition was obtained by uniformly mixing the aforesaid composition 4 and a composition 2 as prepared in Example 1 in a weight ratio of 1:1.

ABS resin (a product of Toray Industries, TOYOLAC™), was loaded into the thermoplastic resin injection molding machine and plasticized in a temperature range of 230 to 270°C. This resin underwent primary injection into the partial cavity formed by the tight fitting of the first top stationary mold and the first bottom mobile mold of the consecutive injection molding apparatus used in Example 1. The injection time was 10 seconds, the curing time 30 seconds, the injection pressure 400 kg/cm, the mold tightening pressure 9.1 Mg (10 tons), and the set temperature of the first bottom mobile mold was 80°C. Subsequently, the first mobile mold was opened, and immediately the first bottom mobile mold containing the ABS resin molding was fit tightly to the second top stationary mold which was set at 110°C, and the main body molding cavity was newly formed. The silicone rubber composition obtained above was subjected to the secondary injection into this cavity by the same method as described in Example 1. The injection time was 10 seconds, the heating time 35 seconds, the injection pressure 150 kg/cm, and the mold tightening pressure was 13.6 Mg (15 tons). The composite obtained was a unified molding of the cured liquid silicone rubber composition and ABS resin. Even after 100 consecutive moldings the interface was flat, the dimensional precision was excellent, and no gelation of silicone rubber was observed. Further, after these consecutive moldings, the mixture of the compositions 4 and 2 remained fluid for a week in the mixer.

## Claims

1. A method for molding a composite in which a thermoplastic resin and a liquid silicone rubber composition are injected consecutively into the cavity of a single mold, or the cavity formed by two or more molds, the composite consisting of cured silicone rubber and thermoplastic resin, wherein the thermoplastic resin is injected first followed by injection of the liquid silicone rubber, which is cured at a temperature greater than 50°C but lower than the softening point of said thermoplastic resin, the method comprising injecting a liquid silicon rubber composition comprising:
(A) 100 parts by weight of an organopolysiloxane described by average unit formula R¹ₐR²_{b}SiO_{(4-a-b)/2}, where R¹ is a monovalent hydrocarbon group which does not contain aliphatic unsaturated linkage, R is an alkenyl group, a is a number of 1.90 to 2.05, b is a number of 0.0005 to 0.1, and a+b is a number of 1.91 to 2.06,
(B) 1 to 1,000 parts by weight platinum metal per one million parts of (A) where the platinum metal is added as a spherical particle catalyst comprising a thermoplastic resin having a softening point of 50 to 150°C and an average particle size of 0.01 to 10 µm and a platinum catalyst providing 0.01 weight percent or greater of platinum metal,
(C) an organohydrogenpolysiloxane containing at least 3 hydrogen atoms bonded to silicon atoms in a molecule and the amount of (C) is such that the ratio of the number of moles of hydrogen atoms bonded to silicon atoms in (C) and the number of moles of alkenyl groups bonded to silicon atoms in (A) is 0.5:1 to 20:1, and
(D) 0.005 to 10 parts by weight of a hydrosilylation reaction inhibitor.

2. A method according to Claim 1, where the liquid silicone rubber composition is packaged as a two-part system, a Part 1 comprising a portion of the (A) constituent and all of the (B) constituent, and a Part 2 comprising the remainder of the (A) constituent, the (C) constituent, and the (D) constituent.

3. A method according to Claim 1, where the (A) constituent is a dimethylvinylsiloxy-capped dimethylpolysiloxane having a viscosity in a range of 10 to 1,000,000 mPa.s (centipoise) at 25°C.

4. A method according to Claim 1, where the platinum catalyst of the (B) constituent is a complex of chloroplatinic acid and an alkenylsiloxane and the thermoplastic resin of the (B) constituent is a silicone resin.

5. A method according to Claim 1, where the amount of the (B) constituent is in the range of 1 to 100 parts by weight as platinum metal per one million parts of the (A) constituent.

6. A method according to Claim 1, where the (C) constituent has a viscosity in the range of 3 to 10,000 mPa.s (centipoise) at 25°C.

7. A method according to Claim 1, where the amount of addition of the (C) constituent is that providing a ratio of the number of moles of hydrogen atoms bonded to silicon atoms in the (C) constituent to the number of moles of alkenyl groups bonded to silicon atoms in the (A) constituent of 1:1 to 3:1.

8. A method according to Claim 1, where the constituent (D) is selected from a group consisting of 2-methyl-3-butyn-2-ol, 2-phenyl-3-butyn-2-ol, 1-ethynyl-1-cyclohexanol, 3-methyl-1-hexyn-3-ol, 1,5-hexadiyne, 1,6-heptadiyne, 1,3-divinyltetramethyldisiloxane, 1,3,5,7-tetravinyltetramethylcyclotetrasiloxane, and 1,3-divinyl-1,3-diphenyldimethyldisiloxane.

9. A method according to Claim 1, where the liquid silicone rubber composition further comprises a fumed silica having a hydrophobicized surface.
